# EUROPÄISCHE PATENTSCHRIFT

(11) **EP 3 019 388 B1**
(45) Veröffentlichungstag und Bekanntmachung des Hinweises auf die Patenterteilung: **24.10.2018**
(21) Anmeldenummer: 14738469.7
(22) Anmeldetag: 08.07.2014
(51) Int. Cl.: B62D 29/04, B29B 11/16, B29L 31/30

(54) **PREFORM-ELEMENT FÜR DIE HERSTELLUNG EINER KRAFTFAHRZEUGSKAROSSERIE**
PREFORM PART FOR THE MANUFACTURE OF A CAR STRUCTURE
PRÉFORME POUR LA FABRICATION D'UNE CAROSSERIE DE VOITURE

(30) Priorität: 12.07.2013 DE 102013213653
(43) Veröffentlichungstag der Anmeldung: 18.05.2016
(73) Patentinhaber: Bayerische Motoren Werke Aktiengesellschaft, 80809 München (DE)
(72) Erfinder: HOGGER, Thomas, 83624 Otterfing (DE); BECHERER, David, 80992 München (DE); GOLDYN, Lukasz, 80807 München (DE)
(86) Internationale Anmeldenummer: PCT/EP2014/064512
(87) Internationale Veröffentlichungsnummer: WO 2015/004092

(56) Entgegenhaltungen:
- EP-A1- 1 972 421
- EP-A1- 2 345 529
- WO-A1-2013/017601
- DE-A1-102007 019 738
- DE-A1-102011 089 044
- FR-A1- 2 732 301
- US-A1- 2006 048 890

## Beschreibung

Die vorliegende Erfindung betrifft ein Kraftfahrzeug mit einer Karosserie mit Preform-Element bzw. einer Preform-Struktur, und insbesondere ein Kraftfahrzeug mit einer Karosserie mit einer Preform-Struktur, die eine optimierte Verbindung zwischen zwei oder mehr Preform-Elementen erlaubt.
Im Bereich der Automobilindustrie steigt im Zusammenhang mit der Zunahme von Elektrobetriebenen Fahrzeugen die Nachfrage nach leichtgewichtigen und auch ressourcenschonenden Lösungen zur Steigerung der Energieeffizienz. Im Rahmen des Leichtbaus etablieren sich immer mehr Faserverbundwerkstoffen.
Bauteile aus kohlenstofffaserverstärktem Kunststoff bilden aufgrund ihrer hervorragenden mechanischen Eigenschaften eine große Gruppe unter den Faserverbundwerkstoffen. Die zahlreichen Vorteile von kohlenstofffaserverstärktem Kunststoffbauteilen gegenüber konventionellen Bauteilen, wie z. B. hohe Steifigkeit, Korrosionsbeständigkeit, beanspruchungsgerechte Auslegung etc. sind somit auch für die Automobilindustrie interessant.
Aufgrund der Fertigungsabläufe in der Automobilindustrie werden sogenannte Vorformlinge bzw. Preform-Elemente verwendet, die bereits in eine der Anwendung angepasste Form gebracht sind. Vorformlinge, Preform-Elemente, bzw. kurz Preforms werden häufig aus einer Schichtung von Fasermatten erstellt, die zusammengelegt und geschnitten sind und bereits in die notwendige räumliche Form gebracht sind.
Wegen der zum Teil komplexen Strukturen im Automobilbau werden häufig zwei oder mehr Vorformlinge bzw. Preform-Elemente zu einer Gesamtstruktur zusammengesetzt. In einem Grenzbereich müssen die einzelnen Vorformlinge bzw. Preform-Elemente verbunden werden. Da aus Stabilitätsgründen eine Stumpfnaht in der Regel nicht sinnvoll ist, erfolgt die Verbindung in der Regel durch ein Überlappen der angrenzenden Randbereiche.

Trotz Überlappung soll im Regelfall auf wenigstens einer Seite der Verbindung eine Stufe vermieden werden. Da die Vorformlinge bzw. Preform-Elemente eine gewisse Wandstärke aufweisen, ist bei einem Preform-Element der Randbereich häufig gekröpft, d.h. weist einen Doppelknick auf, bei dem das Oberflächenniveau um die Materialstärke des angrenzenden Preform-Elementes zurückspringt.

In diesem Bereich ist bei Faserverbundwerkstoffen, insbesondere auch kohlefaserverstärkten Kunststoffen, ein materialschwächender Wandversatz vorhanden. Um eine Mindeststabilität zu erreichen, wäre im Bereich einer Materialschwäche eine Verstärkung notwendig, die jedoch wiederum eine Gewichtszunahme zur Folge hätte.

DE 10 2011 089 044 A1 zeigt eine Kraftfahrzeugkarosserie, die einen Karosseriemittelbau hat. Der Karosseriemittelbau weist einen hinteren Boden und einen damit verbundenen Querträger aus faserverstärktem Kunststoff auf. Bevorzugt verläuft der Querträger zwischen einem linken seitlichen Längsträger und einem rechten seitlichen Längsträger. Die Kraftfahrzeugkarosserie kann selbsttragend sein.

US 2006/0048890 A1 beschreibt ein Verfahren zur Herstellung einer ringförmigen, faserverstärkten zusammengesetzten Struktur. Das Verfahren weist die Schritte des Formens einer ringförmigen Preform auf, an die eine weitere ringförmige Preform gefügt wird. Auf die damit erhaltene Struktur wird eine zylinderförmige Preform gefügt. Die damit erhaltene Struktur wird mit einer Harz-Matrix imprägniert und die Herz-Matrix anschließend ausgehärtet.

DE 10 2007 019 738 A1 beschreibt ein Karosseriemodul für eine Karosseriestruktur eines Kraftfahrzeugs, das mindestens zwei Rahmenteile umfasst. Die zwei Rahmenteile sind als Vorform-Teile aus einem Verstärkungswerkstoff aufgebaut, durch einen RTM-Prozess durchgeharzt und zu einer einstückigen Unterbaugruppe des Karosseriemoduls verbunden.

In FR 2 732 301 A1 wird eine Automobilstruktur gezeigt, die aus mehreren Elementen zusammengesetzt ist.

EP 1 972 421 A1 beschreibt ein aus zwei Elementen zusammengesetztes Bauteil, von denen eines der Bauteile ein U-förmiges und das andere eine T-förmiges Karbonfaser-Bauteil ist.

In EP 2 345 529 A1 wird ein Verfahren zur Herstellung eines zusammengesetzten Bauteils beschrieben, welches aus zwei Primärstrukturen und einem thermoplastischen Blech aufgebaut ist.

WO 2013/017601 A1 beschreibt ein Verfahren zur Herstellung einer zusammengesetzten Pleuelstange mit einer erhöhten mechanischen Festigkeit.

Vor diesem Hintergrund kann es als eine Aufgabe der vorliegenden Erfindung betrachtet werden, eine Preform-Struktur bereitzustellen, die hinsichtlich einer Verbindung von zwei oder mehr Preform-Elementen eine höhere Stabilität bei gleichem Gewicht, bzw. ein geringeres Gewicht bei gleicher Stabilität aufweist.

Gemäß einer beispielhaften Ausführungsform der Erfindung wird ein Kraftfahrzeug mit einer Karosserie mit Preform-Element bereitgestellt mit einem ersten Stapel einer Mehrzahl von Fasermatten mit einer gemeinsamen ersten Außenkontur, einer ersten Preform-Fläche, einem ersten Preform-Randbereich und einer ersten Preform-Kante.

Die erste Preform-Kante begrenzt wenigstens einen Teil der Außenkontur, wobei sich der erste Randbereich zwischen der Preform-Fläche und der ersten Preform-Kante erstreckt, wobei der Preform-Randbereich gegenüber der an ihn angrenzenden Preform-Fläche durch einen ersten Knick getrennt und der erste Randbereich gegenüber der an ihn angrenzenden ersten Preform-Fläche geneigt ist.

Auf diese Weise ist es möglich, ein Preform-Element bereitzustellen, das aufgrund seines geneigten und abgeknickten Randbereiches mit einem korrespondierenden Teil eines weiteren Preform-Elementes verbunden werden kann, sodass eine durch eine Kröpfung entstehende Schwachstelle vermieden werden kann.
Gemäß einer weiteren beispielhaften Ausführungsform der Erfindung wird ein Kraftfahrzeug mit einer Karosserie mit einer Preform-Struktur bereitgestellt, mit einem Preform-Element wie oben beschrieben und einem zweiten Preform-Element.
Das zweite Preform-Element einen zweiten Stapel einer Mehrzahl von Fasermatten mit einer gemeinsamen zweiten Außenkontur, einer zweiten Preform-Fläche, einem zweiten Preform-Randbereich und einer zweiten Preform-Kante aufweist.
Die zweite Preform-Kante begrenzt wenigstens einen Teil der zweiten Außenkontur, wobei sich der zweite Randbereich zwischen der zweiten Preform-Fläche und der zweiten Preform-Kante erstreckt, wobei der erste Randbereich und der zweite Randbereich eine Überlappung bilden.
Auf diese Weise kann eine Preform-Struktur bereitgestellt werden, die aus beispielsweise zwei Preform-Elementen zusammengesetzt ist, wobei an dem Verbindungsbereich zwischen dem ersten Preform-Element und dem zweiten Preform-Element durch die Ausgestaltung eines abgeknickten und geneigten Randbereiches wenigstens eines Preform-Elementes eine materialschwächende Kröpfung bzw. Doppelstufe in einer Preform-Struktur vermieden werden kann.
Dabei ist es von Bedeutung, dass die Preform-Elemente separat vorgefertigt werden können, und in der vorgefertigten Form miteinander verbunden werden können. Insbesondere kann durch die Ausgestaltung der zuvor beschriebenen Preform-Struktur mit den Preform-Elementen vermieden werden, dass beispielsweise einzelne Faserschichten im Randbereich der beiden Preform-Elemente abwechselnd einander überlappen.

Im Gegensatz zu der oben beschriebenen Ausführungsform ist bei einer wechselseitigen Überlappung der einzelnen Faserschichten von zwei angrenzenden Faserschichtstapeln keine Fertigung von Preformen möglich. Vielmehr müssen die einzelnen Faserschichten angrenzend überlappend einzeln aufgelegt werden, was grundsätzlich einen hohen Arbeitsaufwand bedeutet. Bei einer Preform erfolgt jedoch die Vorfertigung nach Form und Maß eines Faserschichtstapels.

Daher muss eine Verbindung der Preform-Elemente anders erfolgen als in eine wechselseitigen Überlappung einzelner Schichten. Insbesondere kann die Preform-Struktur gemäß der Erfindung auch bei der Fertigung hoher Stückzahlen eingesetzt werden, da insbesondere ein zeitaufwändiges abwechselnde Überlappen der angrenzenden Faserschichtstapel vermieden werden kann durch die spezielle Ausgestaltung der Preform-Randbereiche mit einer Neigung und einem Knick in Abgrenzung zu einer angrenzenden Preform-Fläche.

Gemäß einer beispielhaften Ausführungsform der Erfindung sind die Fasermatten Kohlefasermatten.

Auf diese Weise kann ein leichtes Material bereitgestellt werden, das eine hohe Stabilität aufweist und nach heutigen Erkenntnissen unbedenklich hinsichtlich sowohl Umwelt- als auch Gesundheitsaspekten ist.

Gemäß einer beispielhaften Ausführungsform der Erfindung sind die Kohlefasermatten gewebt.

Auf diese Weise kann eine in sich schon vorstabilisierte Struktur einer Fasermatte bereitgestellt werden. Darüber hinaus können unterschiedliche Webmuster angewendet werden, die insbesondere Berücksichtigung finden bei unterschiedlichen Formen, die ein Fasermattenstapel annehmen soll.

Gemäß einer beispielhaften Ausführungsform der Erfindung sind die Kohlefasermatten derart gelegt, dass die Kohlefasern im Wesentlichen gleich ausgerichtet sind und quer vernäht sind.

Auf diese Weise kann durch ein Gelegestruktur eine Aufdickung der Kohlefasermatten vermieden werden, insbesondere wenn ein Faden für die Quervernähung dünner ist als die vernähte Kohlefaserstruktur.

Gemäß einer beispielhaften Ausführungsform der Erfindung ist der zweite Preform-Randbereich gegenüber der an ihn angrenzenden zweiten Preform-Fläche durch einen zweiten Knick getrennt und der zweite Randbereich gegenüber der an ihn angrenzenden zweiten Preform-Fläche geneigt.

Auf diese Weise weisen die wenigstens zwei Preform-Elemente übereinstimmend abgeknickte Randbereiche auf, sodass eine im Wesentlichen symmetrische Verbindung im Überlappungsbereich hergestellt werden kann.

Gemäß einer beispielhaften Ausführungsform der Erfindung liegen der erste Preform-Randbereich und der zweite Preform-Randbereich jeweils an einer Seite überlappend aneinander, die von der jeweiligen Knickrichtung abgewandt liegt.

Auf diese Weise kann eine Verbindung hergestellt werden, bei dem die beiden Preform-Flächen der beiden aneinander grenzenden Preform-Elemente auf einer Ebene ohne Versatz zueinander liegen können, während die Preform-Randbereiche durch die Abknickung einander überlappen können.

Gemäß einer beispielhaften Ausführungsform der Erfindung weist der zweite Randbereich eine zunehmende Verringerung einer Materialstärke des zweiten Preform-Elementes in Richtung auf die zweite Preform-Kante auf.

Auf diese Weise kann erreicht werden, dass die Preform-Struktur im Überlappungsbereich auf einer Seite nicht aufträgt und somit ein einheitliches und durchgängiges Niveau der beiden Preform-Flächen und des Überlappungsbereiches möglich ist.

Gemäß einer beispielhaften Ausführungsform der Erfindung ist die Überlappung in einem Strukturkantenbereich in Richtung einer Kante der Preform-Struktur verbreitert.

Auf diese Weise kann erreicht werden, dass insbesondere in einem Kantenbereich, der üblicherweise stärker beansprucht ist, eine größere Überlappung vorhanden ist und somit die Kantenstabilität der Preform-Struktur insbesondere im Übergangsbereich von einem ersten Preform-Element zu einem zweiten Preform-Element verstärkt ist.

Gemäß einer beispielhaften Ausführungsform der Erfindung weist wenigstens einer von dem ersten Randbereich und dem zweiten Randbereich eine geringere Materialstärke auf als die Materialstärke der entsprechenden angrenzenden Preform-Fläche derart, dass an dem entsprechenden Knick auf der von der Knickrichtung abgewandten Seite eine zurückspringende Stufe entsteht.

Auf diese Weise kann der Überlappungsbereich dünner ausgestaltet werden, sodass der Überlappungsbereich eine geringere Stärke aufweist als die Summe der Materialstärke im ersten Preform-Flächenbereich und der Materialstärke im zweiten Preform-Flächenbereich. Mit anderen Worten kann bei übereinstimmender Materialstärke der beiden Preform-Flächen der Überlappungsbereich dünner ausgestaltet werden als die doppelte Materialstärke.

Gemäß einer beispielhaften Ausführungsform der Erfindung geht der erste Randbereich seitlich in Richtung und bis zu einer Strukturkante in einen ersten Randkantenbereich über, und der zweite Randbereich geht seitlich in Richtung und bis zu der Strukturkante in einen zweiten Randkantenbereich über.

Einer von dem ersten Randkantenbereich und dem zweiten Randkantenbereich verläuft gegenüber der entsprechenden angrenzenden Preform-Fläche ungeknickt und der andere von dem ersten Randkantenbereich und dem zweiten Randkantenbereich verspringt gegenüber der entsprechenden Preform-Fläche im Überlappungsbereich um eine Materialstärke des einen Preform-Elementes in Knickrichtung zurück.

Die von der Überlappung abgewandte Seite des einen Randkantenbereiches und die in die gleiche Richtung orientierte Fläche der an den anderen Randkantenbereich angrenzenden Preform-Fläche weisen ein übereinstimmendes Niveau auf.

Auf diese Weise kann insbesondere in einem Strukturkantenbereich auf einer Seite ein gleiches Niveau der Preform-Elementflächen und des Überlappungsbereiches bereitgestellt werden, sodass beispielsweise flach anliegende Flansche auf die Preform-Struktur insbesondere im Randbereich aufgebracht werden können. Insbesondere können auf diese Art und Weise die Flansche ungeknickt gefertigt werden, wobei abseits der Strukturkantenbereiche die vorteilhafte Wirkung der Preform-Struktur mit abgeknickten Randbereichen zur Entfaltung kommt.

Es sei verstanden, dass die einzelnen oben beschriebenen Merkmale selbstverständlich auch untereinander kombiniert werden, wodurch sich zum Teil auch vorteilhafte Wirkungen einstellen können, die über die Summe der Einzelwirkung hinausgehen.

Diese und andere Aspekte der vorliegenden Erfindung werden durch die Bezugnahme auf die hiernach beschriebenen beispielhaften Ausführungsformen erläutert und verdeutlicht.

Beispielhafte Ausführungsformen werden im Folgenden mit Bezugnahme auf die folgenden Zeichnungen beschrieben.
Fig. 1 zeigt eine beispielhafte Ausführungsform eines Preform-Elementes.
Fig. 2 zeigt eine beispielhafte Ausführungsform einer Preform-Struktur mit einem ersten Preform-Element und einem zweiten Preform-Element.
Fig. 3 beschreibt eine Schnittansicht einer Preform-Struktur gemäß einer beispielhaften Ausführungsform der Erfindung analog der Fig. 2.
Fig. 4 beschreibt eine Preform-Struktur, die nicht Teil der Erfindung ist, mit einem Randbereich des zweiten Preform-Elementes, dessen Materialstärke in Richtung der zweiten Preform-Kante kontinuierlich abnimmt.
Fig. 5 zeigt eine beispielhafte Ausführungsform der Erfindung, bei der die Materialstärke im Überlappungsbereich geringer ist als die Summe der Materialstärken der beiden angrenzenden Preform-Elemente.
Fig. 6 zeigt eine Analogie zu Fig. 5, die nicht Teil der Erfindung ist und bei der die Materialstärke im Randbereich des zweiten Preform-Elementes in Richtung der Preform-Kante kontinuierlich abnimmt.
Fig. 7 zeigt eine perspektivische Ansicht einer Preform-Struktur, die nicht Teil der Erfindung ist und bei der in einem Strukturrandbereich ein einheitliches Niveau der Preform-Fläche auf einer Seite hergestellt ist, wobei in einem daran angrenzenden Bereich der Preform-Randbereich gegenüber der Preform-Fläche geknickt ist.
Fig. 8 zeigt eine perspektivische Ansicht der in Fig. 7 gezeigten Anordnung, die nicht Teil der Erfindung ist, jedoch von der gegenüberliegenden Seite.
Fig. 9 zeigt eine verbreiterte Überlappung in einem Strukturrandbereich gemäß einer ersten Ausführungsform der Erfindung.
Fig. 10 zeigt eine verbreiterte Überlappung gemäß einer zweiten Ausführungsform der Erfindung.
Fig. 11 zeigt einen überlappenden Strukturrandbereich mit verbreiterter Überlappung gemäß einer dritten Ausführungsform der Erfindung.

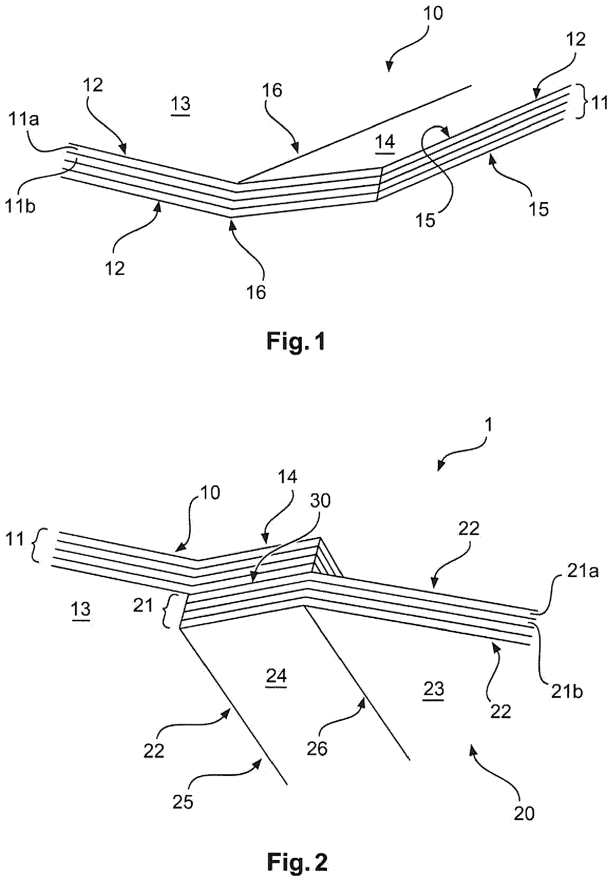

Fig. 1 zeigt ein Preform-Element 10 mit einem Stapel von Fasermatten 11, wobei die Fasermatten 11a, 11b zu dem Stapel 11 gestapelt sind. In Fig. 1 sind beispielhaft vier Fasermatten gezeigt, wobei die Erfindung selbstverständlich nicht auf die Anzahl von vier gestapelten Fasermatten beschränkt ist und auch eine geringere oder eine höhere Anzahl von Fasermatten aufweisen kann.
Das Preform-Element weist eine erste Preform-Fläche 13 auf, die im Regelfall die Hauptflächenerstreckung des Preform-Elementes darstellt. Darüber hinaus weist das Preform-Element einen Preform-Randbereich 14 auf, der als ein angrenzender Bereich vorgesehen ist, an den ein weiteres Preform-Element angebunden werden kann. Der hier bezeichnete Randbereich 14 muss nicht um die gesamte Fläche 13 umlaufen.
Vielmehr kann der Randbereich, insbesondere ein überlappender Randbereich nur einen Teilumfang abdecken. Der Preform-Randbereich 14 des Preform-Elementes 10 ist in der in Fig. 1 gezeigten Ausführungsform durch einen Knick 16 vom Preform-Fiächenbereich 13 abgegrenzt, wobei der Preform-Randbereich gegenüber dem Flächenbereich geneigt ist. Der Randbereich 14 erstreckt sich dabei zwischen einem Flächenbereich 13 und der Preform-Kante 15. Das gesamte Preform-Element 10 wird durch eine erste Außenkontur 12 begrenzt.
Es sei verstanden, dass obwohl Fig. 1 einen Randbereich nur an einem Kantenbereich oder einem Teilaußenkonturbereich zeigt, das Preform-Element auch mit einem über Eck verlaufenden Randbereich oder gar einem umlaufenden Randbereich 14 versehen sein kann, der durch einen entsprechenden Knick gegenüber der Preform-Fläche geknickt sein kann. Der Einfachheit halber ist zur Erklärungszwecken hier lediglich ein eindimensionaler Knick gezeigt, wobei der Knick 16 und auch der Randbereich auch gebogen oder über Ecken verlaufen kann.

Fig. 2 zeigt eine beispielhafte Ausführungsform einer Preform-Struktur, die in der hier gezeigten Ausführungsform aus einem ersten Preform-Element 10 und einem zweiten Preform-Element 20 besteht. Die beiden Preform-Elemente 10 und 20 sind in der in Fig. 2 gezeigten Ausführungsform im Wesentlichen übereinstimmend aufgebaut.

Auch das Preform-Element 20 ist hier aus einem zweiten Stapel einer Mehrzahl von Fasermatten 21a, 21b aufgebaut, die zusammen den Stapel 21 bilden. Auch hier sei verstanden, dass die Anzahl der Fasermatten auch größer oder kleiner als die hier gezeigten vier Fasermatten sein kann. Insbesondere kann die Anzahl der Fasermatten für das erste Preform-Element auch unterschiedlich sein zu der Anzahl der Fasermatten des zweiten Preform-Elementes.

In der in Fig. 2 gezeigten Ausführungsform ist auch das zweite Preform-Element mit einem Knick 26 versehen, der den Randbereich 24 gegenüber dem Flächenbereich 23 abgrenzt, wobei sich der Randbereich 24 zwischen der Preform-Kante 25 und dem Knick 26 erstreckt. Das zweite Preform-Element 20 wird auch hier durch eine Außenkontur 22 begrenzt, wobei sich in der Fig. 2 der Preform-Randbereich 24 nur entlang einer Teilaußenkontur erstreckt.

Selbstverständlich kann auch an der dem Betrachter zugewandten Seite ein entsprechender Randbereich mit einem Knick vorgesehen sein, an dem beispielsweise ein weiteres, beispielsweise drittes Preform-Element angebunden werden kann. Durch die Ausgestaltung der beiden Randbereiche mit einer geneigten Abknickung können die beiden Preform-Flächen 13 und 23 des ersten Preform-Elementes 10 bzw. zweiten Preform-Elementes 20 auf einem Niveau angeordnet werden, ohne dass an dem Preform-Randbereich eine Kröpfung vorgesehen sein muss, die das Material der Preform mitunter signifikant schwächen kann.

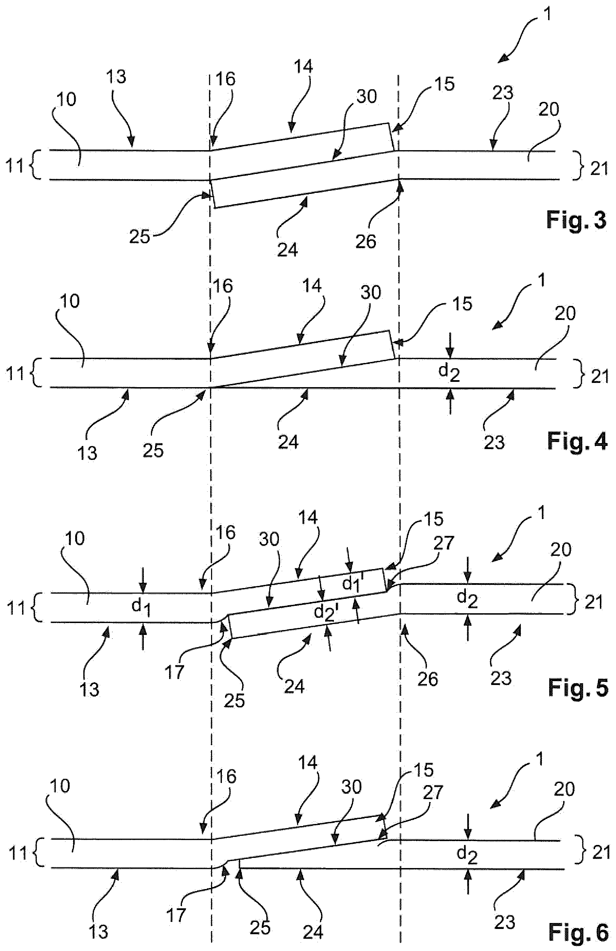

Die Figuren 3, 4, 5 und 6 zeigen beispielhafte Ausführungsformen jeweils in einer Schnittansicht, wobei die dort verwendeten Bezugszeichen übereinstimmend verwendet werden mit den in den Figuren 1 und 2 verwendeten Bezugszeichen. Die Figuren 4 und 6 sind nicht Teil der Erfindung.

Fig. 3 zeigt eine Schnittansicht einer Preform-Struktur wie sie in Fig. 2 dargestellt ist. In Fig. 3 ist zu erkennen, dass die Randbereiche 14 und 24 des ersten bzw. zweiten Preform-Elementes 10, 20 eine Überlappung 30 aufweisen, wobei die Preform-Flächen 13 und 23 auf einem Niveau sind.

Fig. 3 zeigt eine Ausführungsform, bei der der Randbereich 14 des ersten Preform-Elementes gegenüber der Preform-Fläche 13 nach oben geknickt ist, während der Randbereich 24 des zweiten Preform-Elementes 20 nach unten geknickt ist.

Fig. 4 zeigt eine Ausführungsform, bei der das erste Preform-Element 10 im Wesentlichen gleich dem ersten Preform-Element der Fig. 3 ist. Das zweite Preform-Element 20 weist dabei jedoch keinen Randbereich 24 auf, der einen Knick 26 aufweist, wodurch der Randbereich 24 gegenüber der Preform-Fläche 23 geneigt ist. Vielmehr vermindert sich die Materialstärke d2 im zweiten Randbereich 24 des zweiten Preform-Elementes 20 kontinuierlich in Richtung der zweiten Preform-Kante 25. Die Figur 4 ist nicht Teil der Erfindung.

Auf diese Weise kann erreicht werden, dass auf einer Seite der Preform-Struktur sowohl das Niveau der ersten Preform-Fläche 13, als auch das Niveau der zweiten Preform-Fläche 23, als auch das Niveau des Randbereiches 24 des zweiten Preform-Elementes auf einem Niveau sind und dadurch die Preform-Struktur im Wesentlichen stufenlos gefertigt werden kann. Insbesondere sind in der Fig. 4 keine über das Niveau der Flächen hinaus stehenden Strukturen vorhanden.

Es sei verstanden dass, wenn vom Niveau der Preform-Flächen 13 und 23 die Rede ist, gleiche Flächenorientierungen gemeint sind, insbesondere wenn diese Flächen 13 und 23 die nach unten gerichteten Flächen meint, die sich auf einem gleichen Niveau befinden wie der Randbereich 24. Fig. 5 zeigt eine Ausführungsform, die eine grundsätzliche Struktur aufweist, die die der Fig. 3 ähnlich ist. Dabei weisen sowohl das erste Preform-Element 10 als auch das zweite Preform-Element 20 jeweils einen Knick 16 bzw. 26 auf, wobei die entsprechenden Randbereiche 14 bzw. 24 gegenüber den Preform-Flächen 13 bzw. 23 geneigt sind.
Die Materialstärke d1' des Randbereiches 14ist dabei jedoch in der in Fig. 5 gezeigten Ausführungsform geringer als die Wandstärke d1 des Flächenbereiches 13. Analog ist die Materialstärke d2' des Randbereiches 24 geringer als die Wand- bzw. Materialstärke d2 des Flächenbereiches 23. Auf diese Weise kann der Überlappungsbereich 30 mit einer geringeren Wandstärke erstellt werden als die Summe der beiden Wandstärken d1 + d2.
Eine derartige Verringerung der Wandstärke kann beispielsweise durch ein Verpressen der Fasermatten im Überlappungsbereich 30 erfolgen, wodurch sich die Wandstärke d1' bzw. d2' gegenüber den ursprünglichen Wandstärken d1 und d2 verringert. Es sei verstanden, dass auch die Wandstärke von nur einem Preform-Element im Randbereich vermindert sein kann, während der Randbereich des anderen Preform-Elementes eine im Wesentlichen übereinstimmende Materialstärke wie der Flächenbereich hat, etwa durch eine Vorverpressung eines Randbereiches. Bei einer derartigen Verpressung des Überlappungsbereiches 30 entstehen gegebenenfalls entsprechende Stufen 17 bzw. 27, die den Übergang von der geringeren Wandstärke d1' zu der größeren Wandstärke d1 bzw. von d2' zu d2 markieren.
Fig. 6 zeigt eine weitere Ausführungsform, die eine zunehmende Verringerung der Materialstärke des zweiten Preform-Elementes im zweiten Randbereich 24 zeigt, wobei auch hier entsprechende Stufen 17 bzw. 27 vorhanden sind, die einen Übergang von einer geringeren Wandstärke zu einer größeren Wandstärke darstellen. Es sei verstanden, dass die an den Stufen entstehenden Senken beispielsweise mit einem Bindeharz aufgefüllt werden können, sodass entsprechende Kerbkräfte in diesem Bereich vermindert werden können. Die Figur 6 ist nicht Teil der Erfindung.

In Bezug auf die Knicke 16 bzw. 26 sei angemerkt, dass diese auch nichtscharfkantige Knicke sein können. So können in diesem Bereich auch gewisse Radien vorhanden sein, insbesondere um scharfkantige Knicke zu vermeiden, die unter Umständen eine Materialschwächung hervorrufen können.

Es sei verstanden, dass die entsprechenden Randbereiche 14 bzw. 24, wenn diese im Überlappungsbereich 30 aneinander liegen, auch über die entsprechenden Knicke des gegenüberliegenden Preform-Elementes hinausragen können. Eine Niveauangleichung kann beispielsweise dann durch ein späteres Abtragen der überstehenden Bereiche des Randbereiches erfolgen.

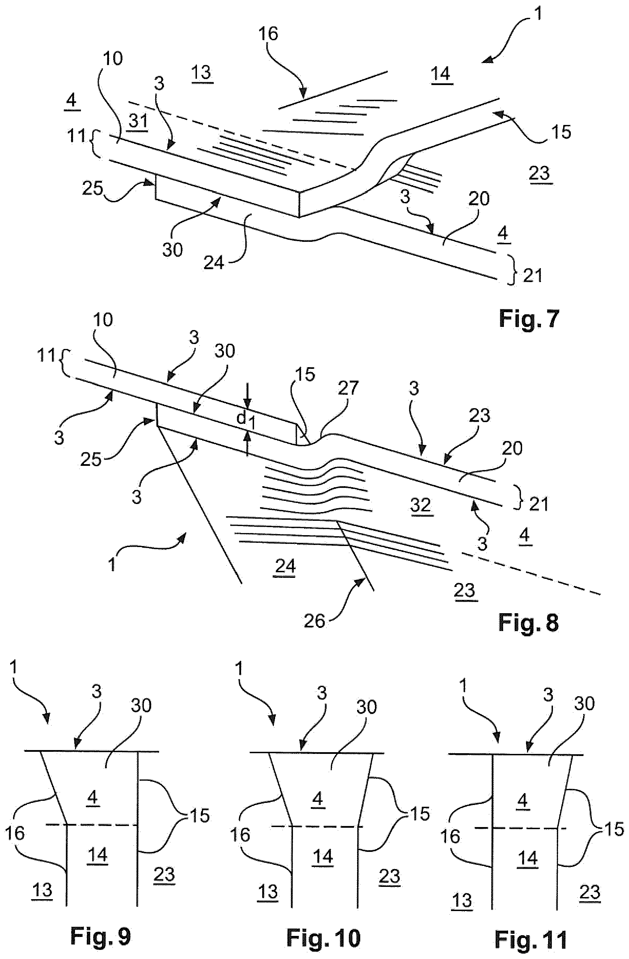

Fig. 7 und 8 zeigen eine Ausführungsform einer Preform-Struktur, die ausgehend von einer Strukturkante 3 einen Strukturkantenbereich 4 aufweist, der auf einer Seite ein im Wesentlichen durchgängiges Niveau aufweist. Dabei kann in diesem Strukturkantenbereich 4 in einem der zwei gezeigten Preform-Elemente eine Kröpfung vorgesehen sein, wodurch das Material um eine Materialstärke des gegenüberliegenden Preform-Elementes zurück verspringt. Die Figuren 7 und 8 sind nicht Teil der Erfindung.

In Fig. 7 verspringt das Material im Randbereich 24 des zweiten Preform-Elementes 20 um eine Materialstärke des ersten Preform-Elementes 10 zurück, sodass die hier nach oben gerichtete Fläche ein im Wesentlichen durchgängiges Niveau aufweist. Erst in einem Bereich, der außerhalb des durch die gestrichelte Linie gekennzeichneten Strukturkantenbereichs liegt, ist dann ein entsprechender Knick und eine entsprechende Neigung des Randbereiches 14 bzw. 24 vorhanden, sodass sich im Bereich jenseits der gestrichelten Linie, das heißt außerhalb des Strukturkantenbereiches, eine Querschnittsstruktur analog zu z.B. der Fig. 3 ergibt.

Wie den Figuren 7 und 8 zu entnehmen ist, verläuft dabei der Randkantenbereich 31 des ersten Preform-Elementes im Wesentlichen ohne eine Neigung oder einen Versatz, während der zweite Randkantenbereich des zweiten Preform-Elementes im Strukturkantenbereich einen Versatz aufweist. Die Figuren 7 und 8 sind nicht Teil der Erfindung.

Die Figuren 9, 10 und 11 zeigen unterschiedliche Ausführungsformen einer Überlappung 30 der Randbereiche 14, 24, hier in einer Aufsicht. Hier liegt das erste Preform-Element im Überlappungsbereich oberhalb des zweiten Preform-Elementes, sodass an dieser Stelle der erste Randbereich 14 oben liegt. Dabei ist in einem Strukturkantenbereich 4 zwischen einer Strukturkante 3 und den entsprechenden Preform-Flächen 13 bzw. 23 eine Verbreiterung der Überlappung 30 vorgesehen.

In Fig. 9 ist gezeigt, dass die erste Preform-Kante im Wesentlichen gerade verläuft, wobei der aufgeweitete Knick 16 eine verbreiterte Überlappung ermöglicht. Der hier nicht sichtbare -da verdeckte- Randbereich 24 weist im Bereich der Überlappung 30 beispielsweise analog des Knickverlaufes 16 seine zweite Preform-Kante 25 auf (hier ebenfalls verdeckt, nicht zu sehen). Analog dazu kann auch der Preform-Kantenverlauf 15 einen Knick bzw. eine Aufweitung aufweisen, so wie in den Figuren 10 und 11 gezeigt ist. Der Knick 16 kann dabei in Richtung der Strukturkante 3 gerade verlaufen.

Es sei hier verstanden, dass sich der Überlappungsbereich 30 zwischen dem Knickverlauf 16 und der ersten Preform-Kante 15 befindet.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt. Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Kraftfahrzeug mit einer Karosserie mit einem ersten und einem zweiten Preform-Element mit
- einem ersten Stapel (11) einer Mehrzahl von Fasermatten (11a, 11b) mit einer gemeinsamen ersten Außenkontur (12), und einem zweiten Stapel (21) einer Mehrzahl von Fasermatten (21a, 21b) mit einer gemeinsamen zweiten Außenkontur (22),
- einer ersten Preform-Fläche (13) und einer zweiten Preform-Fläche (23),
- einem ersten und einem zweiten Preform-Randbereich (14, 24), und
- einer ersten und einer zweiten Preform-Kante (15, 25),
wobei die erste Preform-Kante (15) wenigstens einen Teil der ersten Außenkontur (12) und die zweite Preform-Kante (25) wenigstens einen Teil der zweiten Außenkontur (22) begrenzt,
wobei sich der erste Randbereich (14) zwischen der ersten Preform-Fläche (13) und der ersten Preform-Kante (15) erstreckt und der zweite Randbereich (24) zwischen der zweiten Preform-Fläche (23) und der zweiten Preform-Kante (25) erstreckt,
wobei der erste Preform-Randbereich (14) gegenüber der an ihn angrenzenden ersten Preform-Fläche (13) durch einen ersten Knick (16) getrennt und der erste Randbereich (14) gegenüber der an ihn angrenzenden ersten Preform-Fläche(13) geneigt ist und
wobei der zweite Preform-Randbereich (24) gegenüber der an ihn angrenzenden zweiten Preform-Fläche (23) durch einen zweiten Knick (26) getrennt und der zweite Randbereich (24) gegenüber der an ihn angrenzenden zweiten Preform-Fläche (23) geneigt ist,
wobei der erste Randbereich und der zweite Randbereich eine Überlappung (30) bilden, **dadurch gekennzeichnet, dass** der erste Preform-Randbereich (14) und der zweite Preform-Randbereich (24) jeweils an einer Seite überlappend aneinander liegen, die von der jeweiligen Knickrichtung abgewandt liegt.

2. Kraftfahrzeug mit einer Karosserie mit Preform-Struktur gemäß Anspruch 1, wobei die Fasermatten (11a, 11b) Kohlefasermatten sind.

3. Kraftfahrzeug mit einer Karosserie mit Preform-Struktur gemäß Anspruch 2, wobei die Kohlefasermatten gewebt sind.

4. Kraftfahrzeug mit einer Karosserie mit Preform-Struktur gemäß Anspruch 2, wobei die Kohlefasermatten derart gelegt sind, dass die Kohlefasern im Wesentlichen gleich ausgerichtet sind und quer vernäht sind.

5. Kraftfahrzeug mit einer Karosserie mit Preform-Struktur gemäß einem der Ansprüche 1 bis 4, wobei die Überlappung (30) in einem StrukturKantenbereich (4) in Richtung einer Kante (3) der Preform-Strukur (1) verbreitert ist.

6. Kraftfahrzeug mit einer Karosserie mit Preform-Struktur gemäß einem der Ansprüche 1 bis 5, wobei wenigstens einer von dem ersten Randbereich (14) und dem zweiten Randbereich (24) eine geringere Materialstärke (d1', d2') aufweist als die Materialstärke (d1, d2) der entsprechenden angrenzenden Preform-Fläche (13, 23), derart, dass an dem entsprechenden Knick (16, 16) auf der von der Knickrichtung abgewandten Seite eine zurückspringende Stufe (17, 27) entsteht.

7. Kraftfahrzeug mit einer Karosserie mit Preform-Struktur gemäß einem der Ansprüche 1 bis 6, wobei der erste Randbereich (14) seitlich in Richtung und bis zu einer Strukturkante (3) in einen ersten Randkantenbereich (31) übergeht, und der zweite Randbereich (24) seitlich in Richtung und bis zu der Strukturkante (3) in einen zweiten Randkantenbereich (32) übergeht, wobei einer (31) von dem ersten Randkantenbereich (31) und dem zweiten Randkantenbereich (32) gegenüber der entsprechenden angrenzenden Preform-Fläche (13) ungeknickt verläuft und der andere (32) von dem ersten Randkantenbereich (31) und dem zweiten Randkantenbereich (32) gegenüber der entsprechenden Preform-Fläche (23) im Überlappungsbereich (30) um eine Materialstärke (d1) des einen Preform-Elementes (10) in Knickrichtung zurück verspringt, sodass die von der Überlappung (30) abgewandte Seite des einen Randkantenbereiches (31) und die in die gleiche Richtung orientierte Fläche (13) der an den anderen Randkantenbereich (32) angrenzenden Preform-Fläche (23) ein übereinstimmendes Niveau aufweisen.

## Claims

1. A motor vehicle comprising a chassis having a first and a second preform element, having
• a first stack (11) of a plurality of fibre mats (11a, 11b) having the same first outer contour (12), and a second stack (21) of a plurality of fibre mats (21a, 21b) having the same second outer contour (22),
• a first preform face (13) and a second preform face (23),
• a first and a second preform peripheral region (14, 24), and
• a first and a second preform edge (15, 25),
the first preform edge (15) defining at least one part of the first outer contour (12), and the second preform edge (25) defining at least one part of the second outer contour (22),
the first peripheral region (14) extending between the first preform face (13) and the first preform edge (15), and the second peripheral region (24) extending between the second preform face (23) and the second preform edge (25),
the first preform peripheral region (14) being separated from the adjacent first preform face (13) by a first bend (16), and the first peripheral region (14) being inclined with respect to the adjacent first preform face (13), and
the second preform peripheral region (24) being separated from the adjacent second preform face (23) by a second bend (26), and the second peripheral region (24) being inclined with respect to the adjacent second preform face (23),
the first peripheral region and the second peripheral region forming an overlap (30), **characterised in that** the first preform peripheral region (14) and the second preform peripheral region (24) each overlap one another on one side which faces away from the bend direction in each case.

2. A motor vehicle comprising a chassis having a preform structure according to claim 1, wherein the fibre mats (11a, 11b) are carbon fibre mats.

3. A motor vehicle comprising a chassis having a preform structure according to claim 2, wherein the carbon fibre mats are woven.

4. A motor vehicle comprising a chassis having a preform structure according to claim 2, wherein the carbon fibre mats are constructed in such a way that the carbon fibres have substantially the same orientation and are sewn up transversely.

5. A motor vehicle comprising a chassis having a preform structure according to any of claims 1 to 4, wherein the overlap (30) in an edge region (4) of the structure is widened in the direction of an edge (3) of the preform structure (1).

6. A motor vehicle comprising a chassis having a preform structure according to any of claims 1 to 5, wherein at least one of the first peripheral region (14) and the second peripheral region (24) has a smaller material thickness (d1', d2') than the material thickness (d1, d2) of the corresponding adjacent preform face (13, 23), such that a recessed step (17, 27) is produced at the corresponding bend (16, 16) on the side facing away from the bend direction.

7. A motor vehicle comprising a chassis having a preform structure according to any of claims 1 to 6, wherein the first peripheral region (14) transitions into a first peripheral edge region (31) laterally in the direction of and as far as a structural edge (3), and the second peripheral region (24) transitions into a second peripheral edge region (32) laterally in the direction of and as far as the structural edge (3), wherein one (31) of the first peripheral edge region (31) and the second peripheral edge region (32) extends in an unbent manner with respect to the corresponding adjacent preform face (13), and the other (32) of the first peripheral edge region (31) and the second peripheral edge region (32) recedes with respect to the corresponding preform face (23) in the bend direction in the overlap region (30) by a material thickness (d1) of the one preform element (10) such that the side of the one peripheral edge region (31) facing away from the overlap (30) and the face (13), which is oriented in the same direction, of the preform face (23) which is adjacent to the other peripheral edge region (32) are at a consistent level.

## Revendications

1. Véhicule équipé d'une carrosserie comprenant un premier élément de préforme et un second élément de préforme comportant :
- une première pile (11) d'un ensemble de nappes de fibres (11a, 11b) ayant un premier contour externe commun (12) et une seconde pile (21) d'un ensemble de nappes de fibres (21a, 21b) ayant un second contour externe commun (22),
- une première surface de préforme (13) et une seconde surface de préforme (23),
- une première zone de bord de préforme et une seconde zone de bord de préforme (14, 24), et
- une première arête de préforme et une seconde arête de préforme (15, 25),
la première arête de préforme (15) délimitant au moins une partie du premier contour externe (12) et la seconde arête de préforme (25) délimitant au moins une partie du second contour externe (22),
la première zone de bord (14) s'étendant entre la première surface de préforme (13) et la première arête de préforme (15) et la seconde zone de bord (24) s'étendant entre la seconde surface de préforme (23) et la seconde arête de préforme (25),
la première zone de bord de préforme (14) étant séparée de la première surface de préforme (13) qui la délimite par une première pliure (16) et la première zone de bord (14) étant inclinée par rapport à la première surface de préforme (13) qui la délimite, et
la seconde zone de bord de préforme (24) étant séparée de la seconde surface de préforme (23) qui la délimite par une seconde pliure (26) et la seconde zone de bord (24) étant inclinée par rapport à la seconde surface de préforme (23) qui la délimite,
la première zone de bord et la seconde zone de bord formant un chevauchement (30),
**caractérisé en ce que**
la première zone de bord de préforme (14) et la seconde zone de bord de préforme (24) sont appliquées l'une contre l'autre en se chevauchant respectivement sur un côté qui est situé à l'opposé de la direction de pliure respective.

2. Véhicule équipé d'une carrosserie ayant une structure de préforme conforme à la revendication 1,
dans lequel les nappes de fibres (11a, 11b) sont des nappes de fibres de carbone.

3. Véhicule équipé d'une carrosserie ayant une structure de préforme conforme à la revendication 2,
dans lequel les nappes de fibres de carbone sont tissées.

4. Véhicule équipé d'une carrosserie ayant une structure de préforme conforme à la revendication 2,
dans lequel les nappes de fibres de carbone sont déposées de sorte que les fibres de carbone soient orientées de façon essentiellement similaire et sont cousues transversalement.

5. Véhicule équipé d'une carrosserie ayant une structure de préforme conforme à l'une des revendications 1 à 4,
dans lequel le chevauchement (30) est élargi dans une zone d'arête de structure (4) en direction d'une arête (3) de la structure de préforme (1).

6. Véhicule équipé d'une carrosserie ayant une structure de préforme conforme à l'une des revendications 1 à 5,
dans lequel la première zone de bord (14) et/ou la seconde zone de bord (24) a(ont) une épaisseur de matériau (d1', d2') inférieure à l'épaisseur de matériau (d1, d2) de la surface de préforme (13, 23) qui la(les) délimite de façon à obtenir sur la pliure (16, 16) correspondante un gradin en retrait (17, 27) sur la face située à l'opposé de la direction de pliure.

7. Véhicule équipé d'une carrosserie ayant une structure de préforme conforme à l'une des revendications 1 à 6,
dans lequel la première zone de bord (14) se prolonge latéralement en direction et jusqu'à une arête de structure (3) par une première zone d'arête de bord (31) et la seconde zone de bord (24) se prolonge latéralement en direction et jusqu'à l'arête de structure (3) par une seconde zone d'arête de bord (32), l'une des zones d'arête de bord (31) parmi la première zone d'arête de bord (31) et la seconde zone d'arête de bord (32) s'étendant en étant non repliée par rapport à la surface de préforme (13) limitrophe correspondante tandis que l'autre zone d'arête de bord (32) parmi la première zone d'arête de bord (31) et la seconde zone d'arête de bord (32) revient en arrière dans la direction de pliure par rapport à la surface de préforme correspondante (23) dans la zone de chevauchement (30), de l'épaisseur de matériau (d1) du premier élément de préforme (10) de sorte que le côté de la zone d'arête de bord (31) tourné à l'opposé du chevauchement (30) et la surface (13) orientée dans la même direction de la surface de préforme (23) délimitant l'autre zone d'arête de bord (32) soient au même niveau.
